# EUROPÄISCHE PATENTANMELDUNG

(11) **EP 2 762 013 A1**
(43) Veröffentlichungstag der Anmeldung: **06.08.2014**
(21) Anmeldenummer: 13153295.4
(22) Anmeldetag: 30.01.2013
(51) Int. Cl.: A23P 1/14, A23L 1/00, A23L 1/164, A23L 1/212, A23L 1/217

(54) **Verfahren zur Herstellung eines chipsartigen Snacks aus Kartoffeln und/oder Gemüse und danach hergestellte Snacks**

(71) Anmelder: Intersnack Group GmbH & Co. KG, 40468 Düsseldorf (DE)
(72) Erfinder: Haferkamp, Reiner, 41515 Grevenbroich (DE)
(74) Vertreter: Becker Kurig Straus

(57) **Zusammenfassung**

Die vorliegende Erfindung betrifft ein Verfahren zur Herstellung eines Snacks aus Kartoffeln und/oder Gemüse und danach hergestellte Snackprodukte. Das erfindungsgemäße Verfahren zur Herstellung von einem auf Gemüse basierenden Snackprodukt umfasst (a) Vorbreiten des zu verarbeitenden Gemüses; (b) Kochen des vorbereiteten Gemüses; (c) Passieren oder Musen des gekochten Gemüses zu einem Gemüsemus; (d) Zugeben von Zutaten in das Gemüsemus; (e) Aufdressieren des Gemüsemuses in einzelnen Portionen; und (f) Expandieren und Trocknen bei erhöhter Temperatur und unter Unterdruck der Portionen zu dem auf Gemüse basierenden Snack. Das erfindungsgemäße Snackprodukt ist durch das erfindungsgemäße Herstellungsverfahren erhältlich.

## Beschreibung

Die vorliegende Erfindung betrifft ein Verfahren zur Herstellung eines chipsartigen Snacks aus Gemüse und/oder Kartoffeln und danach hergestellte Snacks.

Um herkömmlicherweise Kartoffelchips herzustellen, werden aus der rohen Kartoffelknolle dünne Scheiben geschnitten. Diese Scheiben werden gewaschen, um die beim Schneiden freigewordene Stärke an der Oberfläche zu entfernen. Anschließend werden die Scheiben in heißem Öl (z.B. bei einer Temperatur von ungefähr 178°C) frittiert. Dabei werden die Scheiben gleichzeitig gegart und getrocknet. Durch den hohen Dampfdruck in den Scheiben, kommt es zur Bildung von Wasserdampf und einer raschen Expansion der Gewebestruktur, die durch die weitreichende Trocknung bis auf ca. 1,8 % Restfeuchte zu einer festen schwammartigen Matrix aushärtet. Diese Veränderungen der Struktur ergeben die bekannte knusprige Textur von Kartoffelchips.

Prozessbedingt sind Scheiben der Kartoffelchips von dem Frittieröl umgeben. Durch die offene schwammartige Struktur gelangt Öl in die Matrix und es verbleibt zudem auch eine größere Menge Öl an der Oberfläche der Chips. Der resultierende Ölgehalt der Chips hängt von vielen Prozessfaktoren ab, bleibt in allen Fällen aber ein natürliches Charakteristikum von frittierten Kartoffelchips. Ebenfalls charakteristisch für frittierte Chips ist die Geschmacksgebung durch von außen auf die fettige Oberfläche aufgetragenen Würzmischungen.

Aufgrund des Herstellungsprozesses ist zudem die Bildung von Acrylamid zwar kontrollierbar, jedoch nicht ganz zu vermeiden. Ebenso verbietet sich die Verarbeitung von temperaturempfindlichen Zutaten zu den Scheiben vor dem Frittieren. Die Zugabe von Zutaten ist auf das Aufbringen nach dem Frittieren beschränkt und die Zutaten müssen bereits die erforderliche Haltbarkeit aufweisen.

Aufgabe der vorliegenden Erfindung ist es, ein Verfahren und danach hergestellte Snackprodukte bereitzustellen, die direkt aus der ganzen Kartoffelknolle und/oder anderen Gemüsesorten hergestellt werden, der Prozess aber eine freiere Formwahl zulässt und gleichzeitig sensorische, ernährungsphysiologische Vorteile und vor allem einen reduzierten Gehalt an Acrylamid gegenüber vergleichbaren herkömmlich hergestellten Snacks bietet.

Die erfindungsgemäße Aufgabe wird durch ein Verfahren nach Anspruch 1 und ein Produkt nach Anspruch 13 gelöst.

Das erfindungsgemäße Verfahren zur Herstellung von einem auf Gemüse und/oder Kartoffeln basierenden Snack umfasst (a) Vorbreiten des zu verarbeitenden Gemüses; (b) Kochen des vorbereiteten Gemüses; (c) Passieren oder Musen des gekochten Gemüses zu einem Gemüsemus; (d) Zugeben von Zutaten in das Gemüsemus; (e) Aufdressieren des Gemüsemuses in einzelnen Portionen; und (f) Expandieren und Trocknen bei erhöhter Temperatur und unter Unterdruck der Portionen zu dem auf Gemüse basierenden Snack.

Das erfindungsgemäße Produkt ist durch das erfindungsgemäße Verfahren zur Herstellung von einem auf Gemüse basierenden Snack erhältlich. Das Erfindungsgemäße Verfahren ist insbesondere schonend in Hinsicht auf die Temperaturbeaufschlagung und erzielt Produkte mit einzigartigen Eigenschaften in Geschmack und Textur, d.h. ernährungsphysiologisch und sensorisch. Die Kombination aus vorhergehendem Garen und nachfolgender Vakuumtrocknung verhindert die Bildung von Acrylamid fast vollständig. Insbesondere beträgt der Acrylamidgehalt weniger als 40 µg/kg. Dies ist für einen knusprigen Snack neu und nicht aus dem Stand der Technik ableitbar.

Weitere vorteilhafte Ausführungsformen sind in abhängigen Ansprüchen definiert.

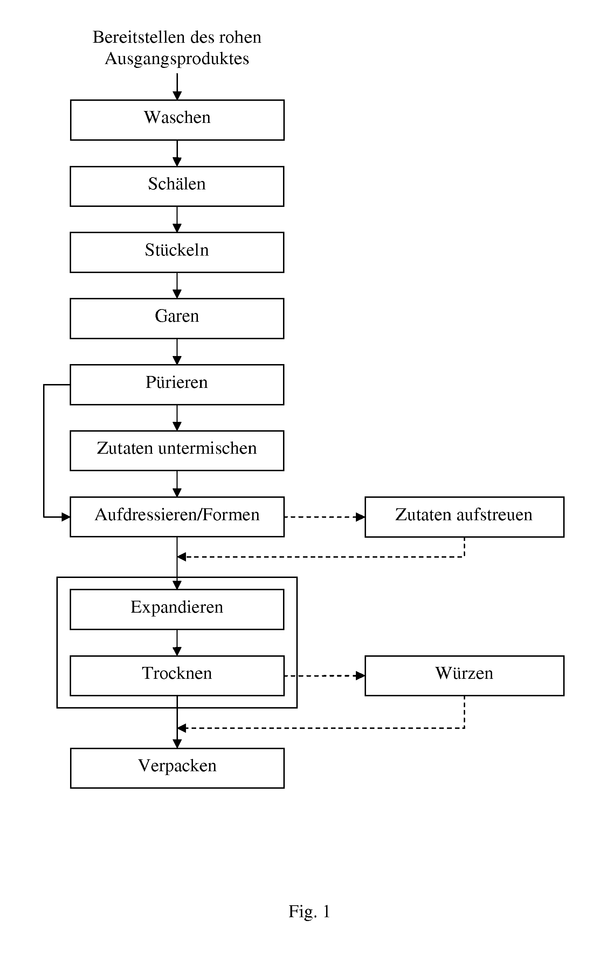

Im Folgenden wird eine detaillierte Beschreibung einer Ausführungsform des erfindungsgemäßen Verfahrens gegeben. Ein Fachmann auf dem Gebiet wird ohne weiteres erkennen, dass Kartoffel problemlos gegen andere Gemüsesorten ersetzt werden können. Die folgende detaillierte Beschreibung erfolgt unter Bezugnahme auf die Zeichnungen, in denen
Figur 1 ein Flussdiagramm für eine bevorzugte Ausführungsform des erfindungsgemäßen Verfahrens zeigt;
Figuren 2 bis 9 einzelne Verfahrenschritte beispielhaft schematisch illustriert: Dampfgaren, Pürieren bzw. Passieren, Untermischen, Aufdressieren bzw. Formen und Expandieren und Trocknen; und
Figur 10 ein Diagramm zeigt, das die Feuchtigkeitsentwicklung von Produkten bei verschiedenen Prozessparameter für den Trocknung- und Expansionsprozesses gemäß Ausführungsbeispiele der vorliegenden Erfindung.

Nachfolgend wird das erfindungsgemäße Verfahren auf der Basis von Kartoffeln zur Herstellung neuer Kartoffelsnacks beschrieben. Der Fachmann auf dem Gebiet der vorliegenden Erfindung wird jedoch ohne weiteres erkennen, dass das erfindungsgemäße Verfahren nicht auf Kartoffeln beschränkt einsetzbar ist. Vielmehr wird der Fachmann verstehen, dass das erfindungsgemäße Verfahren sich auch für andere Gemüsesorten, insbesondere Knollengemüsesorten, bevorzugt stärkehaltige Knollengemüse eignet, ohne dass erfindungswesentliche Verfahrensschritte wesentlich abgewandelt werden müssen.

Unter Gemüse versteht man erfindungsgemäß alle in frischem Zustand nicht lufttrockenen Pflanzenteile, die ohne Entzug wesentlicher Bestandteile roh, gekocht, konserviert oder sonst wie zubereitet direkt zur menschlichen Ernährung dienen, mit Ausnahme der Früchte mehrjähriger Pflanzen, die zum Obst gehören. Nicht zum Gemüse rechnen trockene Samen wie Erbsen, Bohnen, Getreidesamen und ähnliches. Die Einteilung der Gemüsearten kann unter botanischen Gesichtspunkten erfolgen in Algengemüse, Pilze, Wurzelgemüse, Knollengemüse (Spross- und Wurzelknollen), Zwiebelgemüse, Blattstilgemüse, Blattgemüse, Blütenstände als Gemüse, Samegemüse und Fruchtgemüse. In einschlägigen Lehrbüchern sind die wichtigsten Gemüsearten aufgeführt mit Hinweisen auf die botanische Systematik und die Verwendung.

Die Zusammensetzung von Gemüse kann in Abhängigkeit von Sorte und Herkunft stark schwanken. Die Trockenmasse ist meist 10 % bis 20 %. Bestandteile sind 1 % bis 5 % Stickstoffverbindungen, 3 % bis 20 % Kohlenhydrate, 0,1 % bis 0,3 % Fett, ca. 1 % Rohfasern und ca. 1 % Mineralstoffe. Einige Knollen- und Samengemüse wie Kartoffeln haben einen hohen Stärkegehalt und dadurch eine für Gemüse sehr hohe Trockenmasse.

### [Waschen, Schälen und Sortieren]

Im erfindungsgemäßen Verfahren werden bereitgestellte Kartoffeln zunächst gründlich gewaschen, geschält und eventuell sortiert. Das Schälen kann beispielsweise durch Dampf-, Laugen oder Bürstenschäler erfolgen, so dass die Schale der Kartoffeln in einem gewünschten Ausmaß, im Wesentlichen vollständig oder nur teilweise, entfernt werden kann. In diesem Schritt kann zusätzlich eine Sortierung erfolgen, um ggf. grüne Kartoffeln, Ranken und Steine auszusortieren bzw. zu entfernen, die als Verunreinigungen zu betrachten sind.

### [Zerkleinern]

Anschließend werden die geschälten, gereinigten und eventuell sortierten Kartoffeln grob zerkleinert. Bevorzugt werden die Kartoffeln in Stücke bzw. Scheiben geschnitten. Insbesondere werden die Kartoffeln bevorzugt in Stücke bzw. Scheiben mit im Wesentlichen gleichmäßigen Abmessungen geschnitten z.B. würfelförmig mit Kantenlängen von etwa 1 cm bis 5 cm oder Scheiben mit einem Durchmesser von etwas 1 cm bis 5 cm. Die Zerkleinerung der Kartoffeln in Stücke bevorzugt mit im Wesentlichen gleichmäßigen Abmessungen stellt sicher, dass im nachfolgenden Garschritt eine einheitliche Energieübertragung auf die Kartoffelstücke bzw. -Scheiben gewährleistet wird.

### [Garen]

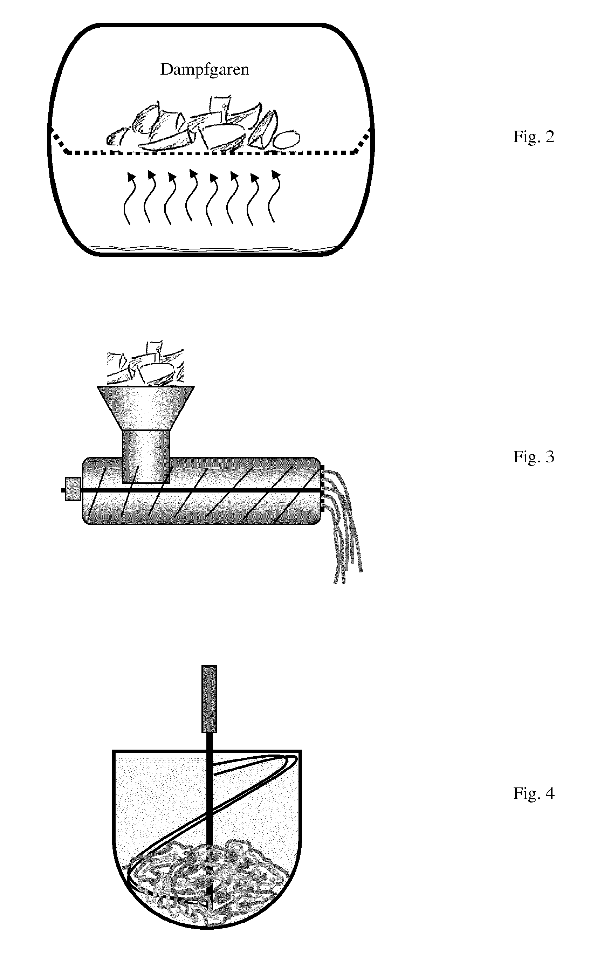

Die Kartoffelstücke bzw. -Scheiben werden anschließend wie auch in Fig. 2 schematisch illustriert gegart bzw. gekocht. Das Garen bzw. Kochen kann durch eines der bekannten Garverfahren durchgeführt werden. Bevorzugt werden die Kartoffelstücke bzw. -Scheiben durch Mirkowellen (beispielsweise 2 mal 2,5 Minuten bei 1600 Watt, 500g Kartoffeln und 50 g Wasser; Gerät: Panasonic NE-3240), in Wasser (beispielsweise ungefähr 25 Minuten Kochzeit bei 100°C bei Normaldruck), in Wasserdampf bei Normaldruck (beispielsweise ungefähr 50 Minuten Dämpfzeit bei 100°C) oder in Wasserdampf bei Überdruck gegart. Das Garen bzw. Kochen erfolgt bevorzugt in einem im Wesentlichen ölfreien Medium. Die Kochzeit kann stark variieren und hängt ganz wesentlich von der Sorte und vom Stärkegehalt der Kartoffeln ab. Die Kartoffelstücke bzw. -Scheiben werden vollständig durchgegart, so dass nachfolgend kein Garprozess mehr erforderlich ist, um ein genießbares Produkt zu erhalten. Besonders bevorzugt werden die Kartoffelstücke bzw. -Scheiben in Wasserdampf bei Überdruck gegart, beispielsweise mit einem Überdruck von bis zu ungefähr 200 kPa (absolut) bei einer Temperatur ungefähr 120°C (abhängig vom gewählten Überdruck) über eine Zeit von ungefähr 10 Minuten gegart.

### [Pürieren bzw. Passieren]

Die gegarten Kartoffeln werden anschließend noch in warmen oder in abgekühlten Zustand wie auch in Fig. 3 schematisch illustriert püriert, passiert bzw. vermust zu einem Mus, das bevorzugt im Wesentlichen klumpenfrei ist. Das Vermusen bzw. Passieren der Kartoffelstückchen kann zum Beispiel erfolgen, indem die gegarten Kartoffelstücke durch eine Lochscheibe gepresst werden oder in einen rotierenden, perforierten Zylinder gegeben werden. Die Lochscheibe bzw. der perforierte Zylinder hat bevorzugt einen Lochdurchmesser von ungefähr 2 bis 6 mm, insbesondere 4,5 mm.

Die verarbeiteten Kartoffelsorten und Qualitäten bzw. deren Mischung werden bevorzugt so ausgesucht, dass dem nach dem Pürieren bzw. Passieren erhaltenen Kartoffelmus möglichst kein Wasser für die weitere Verarbeitung zugesetzt werden muss.

### [Untermischen]

In einem Folgeschritt können Zutaten insbesondere Geschmack tragende bzw. Geschmack gebende Zutaten in frischem, getrocknetem und/oder gefrorenem Zustand untergemischt werden wie in Fig. 4 schematisch illustriert. Als Geschmack tragende bzw. Geschmack gebende Zutaten eignen sich zum Beispiel Salz, Kräuter, Gemüse, Gewürze, Pilze und dergleichen. Insbesondere Kräuter können in gefrorenem Zustand verarbeitet werden. Gemüse als Geschmack tragende bzw. Geschmack gebende Zutat wird bevorzugt in gleicher oder ähnlicher Weise vorbereitet (d.h. gewaschen, geschält und/oder grob zerkleinert), gegart und püriert bzw. passiert wie vorstehend unter Bezugnahme auf Kartoffeln beschrieben.

Das nun mit Zutaten versehene Kartoffelmus wird anschließend nur noch getrocknet. Das heißt, dass die Zutaten oder einige der Zutaten auch frisch oder gefroren in das Kartoffelmus eingearbeitet werden können. Durch den anschließenden Trocknungsschritt werden die frischen und noch feuchten Zutaten durch die Trocknung haltbar gemacht.

Ferner ist es ebenso möglich weitere Additive in dem Untermischschritt zugegeben, die beispielsweise die Verarbeitbarkeit verbessern sollen, wie beispielsweise Emulgatoren, jedoch auch Fette und/oder Öle. Ferner kommen als Zutaten auch Bindung vermittelnde Hilfszutaten wie Stärke, Geliermittel und dergleichen in Frage.

Insbesondere durch Hinzufügen von nativen Ölen, wie z.B. Olivenöl oder Sonnenblumenöl, kann die sensorischen Eigenschaften wie Geschmack und Textur verbessert werden und dem Teig eine Geschmeidigkeit verleit werden, die für die weitere Verarbeitung hilfreich ist. Für die Herstellung von Kartoffelchips auf der Basis des hier beschriebenen erfindungsgemäßen Verfahren hat sich beispielsweise herausgestellt, dass ein Ölgehalt im Bereich von ungefähr 8 bis 12 %, insbesondere 10% in den fertigen Chips aus sensorischen Gründen vorteilhaft ist,. Je nach Produktanforderung bzw. Produktgestaltung kann zum Beispiel der Ölgehalt in einem weiten Bereich variiert werden.

### [Aufdressieren bzw. Formen]

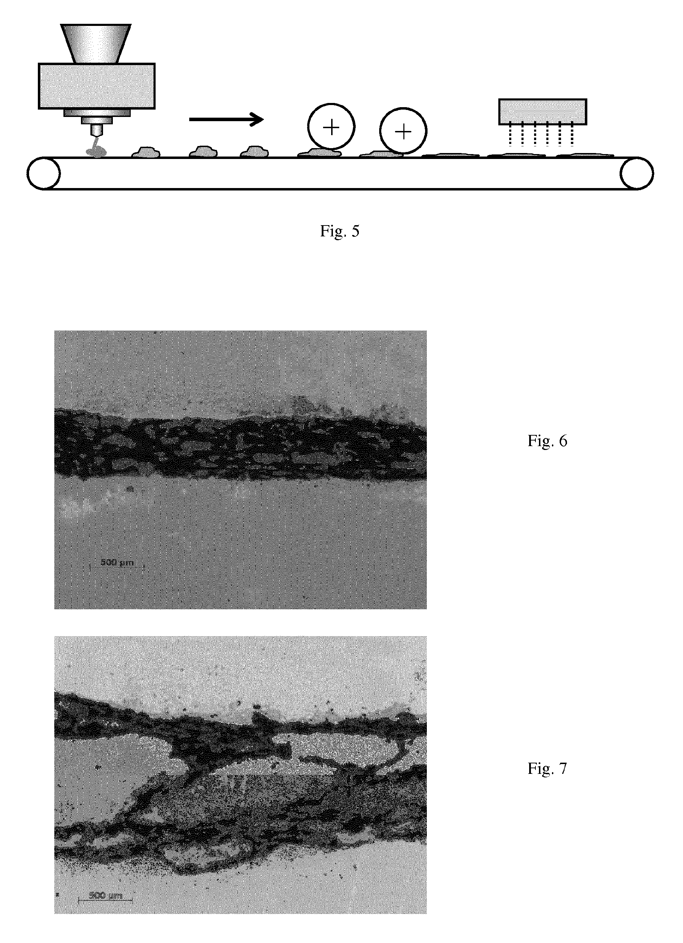

Anschließend werden kleine Portionen (z.B. mit einem Gewicht von 5 bis 8 g) des mit Zutaten versehenen Kartoffelmus auf eine Unterlage aufdressiert wie in Fig. 5 schematisch illustriert. Die Unterlage ist vorzugsweise mit einer Antihaftbeschichtung versehen bzw. weist Antihafteigenschaften auf. So kann die Unterlage beispielsweise aus Silikon oder Teflon bestehen bzw. mit einer Silikon- zw. Teflonbeschichtung versehen sein. Die Unterlage kann ferner wie in Fig. 5 schematisch illustriert eine im Wesentlichen ebene Unterlage sein, auf die kleine, einzelnen Portionen z.B. durch Aufspritzen aufgebracht werden oder die Unterlage kann mit einzelnen Form gebenden Vertiefungen versehenen sein, in die das mit Zutaten versehene Kartoffelmus eingebracht wird, um eine vorbestimmte Produktform zu erhalten.

Die einzelnen, kleinen, aufdressierten Portionen können in einem nachfolgenden Schritt verdichtet werden. Wie in Fig. 5 schematisch illustriert kann ein Verdichten durch Walzen erfolgen, was sich insbesondere für die Herstellung von Chips als eignet erwiesen hat, um die gewünschte flächige Struktur der Chips herzustellen. Das Walzen erfolgt beispielsweise durch mindestens eine Walze, die Antihafteigenschaften aufweist. Für die Herstellung von Chips hat sich gezeigt, dass vorzugsweise ein zweistufiger Walzprozess anzuwenden ist. In einem ersten Walzprozess werden die einzelnen, kleinen, aufdressierten Portionen zunächst auf eine Dicke von ungefähr 3 mm bis 8 mm, insbesondere 4 mm Dicke ausgerollt und in einem zweiten, anschließenden Walzprozess auf die letztendlich gewünschte Dicke von ungefähr 2 mm bis 4 mm, insbesondere 2,5 mm ausgerollt; vgl. hierzu die schematische Darstellung in Fig. 5. Beim Ausdressieren der einzelnen, kleinen Portionen ist, wenn ein Verdichtungsprozess wie das vorbeschriebene Walzen nachfolgt, auf eine vorbestimmte Beabstandung zu achten, um ein Zusammenfließen der einzelnen Portionen beim bzw. nach dem Walzprozess zu vermeiden. Die gewählte Portionsgröße bestimmt die Größe der fertigen Chips. Die beim Walzprozess verwendeten Walzen können eine im Wesentlichen glatte Oberfläche oder auch eine strukturierte, d.h. eine mit Vertiefungen bzw. Vorständen versehene, Oberfläche aufweisen. Eine strukturierte Oberfläche eignet sich beispielsweise zusammen mit einer strukturierten Unterlage, um den einzelnen, kleinen, aufdressierten Portionen eine vorbestimmte Gestalt zu geben. Ein Verdichten kann weiterhin auch einen Pressprozess mit mindestens einer Presse erfolgen. Die Pressen können hierzu ebenso wie die vorbeschriebenen Walzen eine im Wesentlichen glatte oder strukturierte Pressfläche aufweisen und die einzelnen, kleinen, aufdressierten Portionen auf vorbestimmte Dicken verdichten.

Es soll bemerkt werden, dass sich durch andere maschinelle Aufdressierverfahren auch spezielle wieder erkennbare Formen wie z.B. Tiere realisieren lassen können. Die Möglichkeit der Formgebung ist durch die Viskosität, Klebrigkeit und Formbarkeit des Kartoffelmuses eingeschränkt.

In einem kontinuierlichen Prozess kann die Unterlage ein Band sein, auf das die einzelnen, kleinen Portionen aufdressiert werden. In einem Chargenprozess kann die Unterlage ein Blech sein, auf das die einzelnen, kleinen Portionen aufdressiert werden.

Die nun auf der Unterlage vorbereiteten Portionen werden zur anschließenden Verarbeitung einer Trocknung unter Unterdruck zugeführt. Ziel der Trocknung unter Unterdruck ist es, das in dem Kartoffelmus enthaltene Wasser zu Verdampfen und so aus dem Produkt zu entfernen. Um das Entweichen des Wassers in Form von Dampf zu gewährleisten, ist die Unterlage bevorzugt perforiert, d.h. mit Öffnungen definierter Größe versehen, durch die Wasserdampf, der an der Produktunterseite austritt entweichen zu lassen. Anderenfalls besteht die Gefahr, dass sich größere unerwünschte Blasen an der Produktunterseite im weiteren Verlauf des Prozesses bilden, die zu Abplatzungen führen können.

### [Würzen]

Vor dem anschließenden Trocknen unter Unterdruck können weitere Zutaten auf die Oberfläche der vorbereiteten Portionen aufgebracht bzw. aufgestreut werden. Das Aufstreuen kann sowohl vor, zwischen oder nach den vorzugsweise zwei Verdichtungsschritten erfolgen.

Die Oberfläche der aus Kartoffelmus bestehenden, vorbereiteten Portionen ist ausreichend feucht, so dass die aufgebrachten Zutaten vorzugsweise ohne Haftvermittler festkleben und auch nach der Trocknung fest mit dem fertigen Chips verbunden sind. Auf diese Art und Weise lassen sich unter anderem sehr große Stückchen aufbringen, wie es bei herkömmlichen Chips normalerweise nicht möglich ist. Durch die nachfolgende, sehr schonende Trocknung verlieren diese auf der Oberfläche der Portionen aufgebrachten Zutaten kaum an Aroma oder Farbe.

Zum Aufstreuen auf die vorbereiteten Portionen eignen sich eine Vielzahl von Zutaten wie beispielsweise weitere Gewürze (z.B. geschroteter Pfeffer, Muskat, feine Chilistückchen und dergleichen), Gemüse (feine Kartoffelstreifen und dergleichen), Kräuter (z.B. Schnittlauch, Petersilie und dergleichen), Fruchtstückchen (z.B. Cranberrywürfel, feine Apfelwürfel und dergleichen). Insbesondere eignen sich Zutaten zum Aufstreuen, die durch das nachfolgende Trocknen unter Unterdruck haltbar gemacht werden können.

### [Trocknen unter Unterdruck]

Die fertig vorbereiteten Portionen werden nun einen Trocknungsprozess unter Unterdruck zugeführt. Der Trocknungsprozess kann kontinuierlich oder chargenweise durchgeführt werden. Ferner kann der Trocknungsprozess ein-, zwei- bzw. mehrstufig durchgeführt werden.

Der Trocknungsprozess unter Unterdruck kann auch umgangssprachlich als Vakuumtrocknung bezeichnet werden. Es ist jedoch zu bemerken, dass ein "echtes" Vakuum nicht hergestellt werden kann, so dass die Bezeichnung "Trocknung unter Unterdruck" den Prozess geeignet beschreibt.

Da die Masse bereits gegart wurde, ist sie in diesem Zustand schon essbar. Es ist daher kein weiterer Verarbeitungsprozess bei höherer Temperatur wie ein Back-, Frittier- oder anderweitiger Garvorgang mehr erforderlich. Die Trocknung verfolgt vielmehr das Ziel, den Wassergehalt der fertig vorbereiteten Portionen so weit zu reduzieren, dass das daraus erhaltene Produkt haltbar ist.

Das Trocknen unter Unterdruck ist erforderlich, um dem Produkt die gewünschte Textur zu geben, die beispielsweise vergleichbar durch Frittieren erhalten werden kann. Figuren 6 und 7 zeigen mikroskopische Schnittbilder von Produkten, die unter Normaldruck, d.h. in Raumluft, und nach dem erfindungsgemäßen Verfahren unter Unterdruck getrocknet wurden. Wie unmittelbar aus Fig. 6 ersichtlich, wird bei Trocknung in Raumluft das Produkt kompakt und bekommt eine ungenießbar harte Konsistenz, während bei Trocknung unter Unterdruck (hier 20 hPa, absolut) wie in Fig. 7 gezeigt eine aufgelockerte Produktkonsistenz erhalten wird.

Der Unterdruck bei der Trocknung wird so eingestellt, dass bereits bei niedrigen Temperaturen das in dem vorbereiteten Produkt enthaltene Wasser innerhalb des Produktes verdampft und die Produktmasse aufschäumt. Als Aufschäumen ist erfindungsgemäß die Bildung von Hohlräumen in der Produktmasse durch den sich im Produkt bildenden Wasserdampf zu verstehen. Diese durch den Wasserdampf gebildeten Hohlräume führen zu einer Auflockerung der Struktur der Produktmasse. Die fortschreitende Trocknung, d.h. der abnehmende Wassergehalt, führt weiter zur Verfestigung und damit Stabilisierung der durch den Wasserdampf gebildeten Hohlräume. Hierdurch wird eine Auflockerung, d.h. Aufschäumen, der Masse des Produktes erzielt, durch das das Produkt eine schaumartige, bevorzugt sprödbrechende Textur erhält. Die Schaumstruktur von erfindungsgemäß hergestellten Produkten ist bevorzugt feinporig, so dass knusprige Snackprodukte erhalten werden.

Die Trocknung erfolgt vorzugsweise bei einem Unterdruck von weniger als 25 hPa (absolut), bevorzugt unter 20 hPa (absolut) und besonders bevorzugt im Bereich von ungefähr 10 hPa bis 20 hPa, absolut. Der Druck kann auch niedriger eingestellt werden, wie zum Beispiel in einem Bereich von ungefähr 5 hPa bis 10 hPa, absolut. Für die vorstehend angegebenen Temperaturbereiche eignet sich ferner ein Temperaturbereich von ungefähr 150°C bis 100°C, insbesondere 130°C bis 100°C. Die erforderliche Trocknungsdauer beträgt je nach Wahl der Parameter Druck und Temperatur 30 bis 60 Minuten, insbesondere 45 Minuten.

### [kontinuierliche Trocknung]

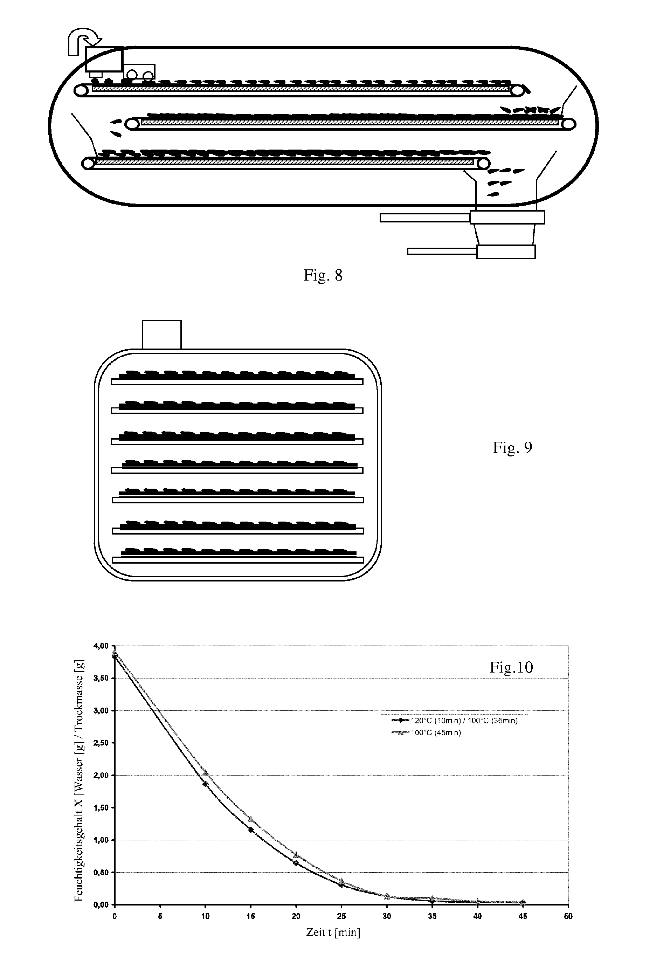

In einem kontinuierlich betriebenen Trocknungsverfahren werden wie schematisch in den Figuren 5 und 8 illustriert, die Portionen auf ein Band als Unterlage aufdressiert, und erforderlichenfalls nachfolgend verdichtet und/oder mit Zutaten bestreut. Der Vorgang aus Aufdressieren, Verdichten und Bestreuen findet bereits in der Unterdruckkammer unter Unterdruck und erhöhter Temperatur statt. Zum Aufdressieren wird das Mus beispielsweise durch ein Rohr zu einer Dressierstation gepumpt und direkt auf dem Transportband dressiert. Die Unterdruckkammer umfasst bevorzugt mehrere Transportbänder für die Portionen bzw. das Produkt, auf denen die Portionen bzw. das Produkt bevorzugt in unterschiedlicher Packungsdichte transportiert wird.

Die Energieübertragung erfolgt auf dem ersten Transportband bevorzugt im Wesentlichen über die Kontaktfläche. Die Transportgeschwindigkeit ist hierbei so eingestellt, dass sich die Portionen bzw. das Produkt zum Ende des Transportbandes von diesem lösen und die Struktur der Portionen bzw. des Produktes soweit gefestigt ist, dass auf dem nächsten Transportband die Portionen eng in Kontakt oder überlappend bzw. gestapelt weiter getrocknet werden können. Sobald sich die Portionen bzw. das Produkt von Transportband ablöst, geht der direkte Kontakt der Portionen bzw. der Produkte mit dem als Wärmeleiter dienenden Transportband verloren und die Wärmeübertragung erfolgt nur noch durch Wärmeleitung durch das Produkt und über die Wärmestrahlung statt. Um die gesamte Trocknungszeit in der Unterdruckkammer zu verkürzen kann die Wärmeübertragung durch Verwendung von Wärmestrahlungsquellen, wie eine oder mehrere Infrarotstrahlungsquellen oder Mikrowellen- bzw. Radiofrequenzsender und dergleichen, erhöht werden.

Sobald die Trocknung soweit fortgeschritten ist, dass die Schaumstruktur stabil ist und die Portionen bzw. das Produkt sich von der Unterlage gelöst haben, können die Portionen bzw. das Produkt zusammen in kompaktierter Weise, d.h. zusammen geschoben, zumindest teilweise überlappend oder gestapelt weiter getrocknet werden. Das Kompaktieren führt zu einer höheren Beladung pro Fläche oder Packungsdichte und somit zu einer effektiveren Nutzung von Trocknerfläche bzw. Kammervolumen.

Bei der Herstellung von Chips aus Kartoffelmus hat sich gezeigt, dass sich eine Wärmeübertragung von ungefähr 8 bis 12 Minuten, insbesondere 10 Minuten über die untere Kontaktfläche ausreicht, um die Chips ausreichend zu expandieren und eine stabile Schaumstruktur zu erhalten, die ein Zusammenschieben der Chips auf den nachfolgenden Bändern ermöglicht, wie dies in Fig. 8 schematisch illustriert ist. Hierzu werden die Chips am Ende des ersten Transportbandes, auf dem die Expansion, Antrocknung und Ablösung erfolgt, auf ein weiteres zweites darunterliegendes Band abgeworfen und dort leicht geschichtet, um den Gesamtprozess kürzer und damit ökonomischer zu gestalten.

### [Chargenweise Trocknung]

Alternative kann der Trocknungs- und Expansionsprozess in der Unterdruckkammer auch chargenweise erfolgen. Hierzu werden die Portionen außerhalb der Unterdruckkammer auf mehreren einzelnen Böden für die Trocknung und Expansion wie vorstehend beschrieben vorbereitet (Aufdressieren, ev. Verdichten und ev. Aufstreuen). Die Böden oder Stapel von Böden werden dann chargenweise durch Schleusen in die Unterdruckkammer ein- und ausgeschleust. Die im Zusammenhang mit der kontinuierlichen Trocknung beispielhaft ausgeführten Prozessparameter können vorzugsweise auch bei der chargenweise durchgeführten Trocknungsprozess Anwendung finden.

### [End- oder Nachtrocknung]

Vorteilhafterweise kann eine End- oder Nachtrocknung in einem weiteren, zweiten Trockner erfolgen, wie dies illustrierend in Fig. 9 beispielhaft dargestellt ist. Eine End- oder Nachtrocknung erlaubt die abschließende Trocknung bei anderen Parametern, d.h. bei einem anderen Druck und/oder eine anderen Temperatur, so dass für die End- oder Nachtrocknung produktspezifisch optimierte Parameter gewählt werden können. Die in Fig. 9 schematisch illustrierte End- oder Nachtrocknung ist als chargenweiser Prozess illustriert. Der Fachmann wird jedoch unmittelbar erkennen, dass hierfür auch ein kontinuierlicher Prozess gewählt werden kann.

Die End- oder Nachtrocknung erfolgt mit Prozessparametern wie unter Bezugnahme auf die Trocknung unter Unterdruck beschrieben, bevorzugt bei einer Temperatur im Bereich von ungefähr 90°C bis 130°C, ferner bevorzugt bei einer Temperatur im Bereich von ungefähr 90°C bis 110°C, und bei einem Druck im Bereich von ungefähr unter 25 hPa (absolut), ferner bevorzugt bei einem Druck im Bereich von ungefähr 10 hPa bis 20 hPa (absolut).

Das vorstehend beschriebene, erfindungsgemäße Verfahren ermöglicht ein knuspriges Produkt mit niedrigem Fettgehalt, ohne dass höhere Temperaturen zur Zubereitung angewendet werden müssen. Durch dieses schonende Expansions- und Trocknungsverfahren werden die in den Rohstoffen natürlich vorhandenen wertvollen Inhaltsstoffe, wie Vitamine, Fette, Farbstoffe, Antioxidantien und Aromen erhalten. Gleichzeitig werden unerwünschte temperaturbedingte Reaktionen, wie die Acrylamidbildung oder Fettoxidation und - Polymerisation sehr niedrig gehalten. Die Sorte bzw. die Qualität des verarbeiteten Gemüses (z.B. Kartoffelsorte und Kartoffelqualität) und die Prozessparameter bestimmen die Schaumqualität (Porengröße, Wandstärke usw.) und damit die Textur des letztendlich erhaltenen Produktes (z.B. Chips).

Die getrockneten Portionen bzw. das getrocknete Produkt, d.h. nach dem Trocknungs- und Expansionsprozess und eventuell End- bzw. Nachtrocknungsprozess, weist schließlich einen Restfeuchtigkeitsgehalt von unter 5 % (Massenanteil), bevorzugt von unter 4 % (Masseanteil) auf. Wie auch aus nachfolgender Diskussion von erfindungsgemäß hergestellten Proben zeigt, ist das erfindungsgemäße Herstellungsverfahren ein außerordentlich schonendes Herstellungsverfahren. 1. So ist der Acrylamidgehalt von erfindungsgemäß hergestellten Snackprodukten beispielsweise geringer als 40 µg/kg und das im Wesentlichen unabhängig von den Zucker- und Asparagingehalten des Ausgangsgemüses.

### [Würzen]

Wenn gewünscht kann das expandierte und getrocknete Produkt zuletzt noch von außen gewürzt werden, wie dies auch bei herkömmlich hergestellten Snackprodukten bekannt ist. Beispielsweise kann ein pulverförmiges Würzmittel mittels herkömmlicher Technik aufgetragen werden. Falls erforderlich und/oder gewünscht, kann zur Haftvermittlung ein sehr geringe Menge Öl (z.B. ungefähr 2 % Öl) vor der Würzung aufgesprüht werden.

### [Zu verarbeitendes Gemüse]

Vorstehend wurde das erfindungsgemäße Verfahren unter anderem unter Bezugnahme auf Kartoffeln als zu verarbeitendes Gemüse beschrieben. Folgende mögliche Grundrezeptur zur Herstellung von Kartoffelchips mit Hilfe des erfindungsgemäßen Verfahrens hat sich als vorteilhaft erwiesen:
Kartoffelmus:~ 97,0 % (Masseanteil);
Salz: ~ 0,5 % (Masseanteil); und
Öl: ~ 2,5 % (Masseanteil).

In den nach dem erfindungsgemäßen Verfahren hergestellten Kartoffelchips wird dann ein Salzgehalt von ungefähr 1,5 % (Masseanteil) und ein Ölgehalt von ungefähr 8 % bis 10 % (Masseanteil) erhalten.

Anhand der vorstehenden Beschreibung wird der Fachmann jedoch unmittelbar erfassen, dass das erfindungsgemäße Verfahren keinesfalls auf Kartoffeln beschränkt ist. Vielmehr lassen sich mit dem erfindungsgemäße Verfahren eine Vielzahl von Gemüsesorten, insbesondere Knollengemüse und vorzugsweise stärkehaltiges Gemüse, zu einem Snack verarbeiten. Erforderlichenfalls kann in das Gemüsemus eine die Gemüsematrix stabilisierende Zutat, d.h. eine Bindung vermittelnde Zutat, wie Stärke oder ein Geliermittel untergemischt werden, um die erwünschte Strukturstabilität nach dem Trocken und Expandieren zu erhalten. In einer Ausführung kann beispielsweise der Kartoffelanteil weitgehend durch andere Gemüsesorten, wie z.B. Karotten, ersetzt werden.

### [Experimentelle Daten]

Durch den Prozessschritt Vorgaren in Kombination mit dem Prozessschritt Trocknung und Expansion unter Unterdruck ergibt sich eine außergewöhnlich feines und knuspriges Snackprodukt, das aufgrund der besonders schonenden Verarbeitungsbedingungen noch den vollen natürlichen Geschmack der verwendeten Zutaten aufweist. Ein gutes Maß für den Grad der Schonung ist die Bildung von Acrylamid. Messungen, die an erfindungsgemäß hergestellten Proben durchgeführt wurden, haben gezeigt, dass der Gehalt bei derartigen erfindungsgemäß hergestellten Snacks selbst bei sehr hohen Zucker- und Asparagingehalten der Gehalt an Acrylamid kleiner als 40 µg/kg liegt, während unter Verwendung der gleichen Rohkartoffeln herkömmlich frittierte Kartoffelchips einen Gehalt an Acrylamid bis über 5000 µg/kg aufweisen. Das erfindungsgemäße Verfahren ermöglicht, die Bildung von Acrylamid fast vollständig zu verhindern, wie aus den Messungen dem Fachmann unmittelbar ersichtlich ist, die in den nachfolgenden Tabellen 1 und 2 zusammengefasst sind.

**Table 1**

| Kartoffel | Trockensubstanz | Glucose | Fructose | Saccharose | Asparagin | Feuchtigkeit |
|---|---|---|---|---|---|---|
| Sorte | % | mg/100 g | mg/100 g | mg/100 g | mg/100 g | % |
| A | 18,4 | 37 | 24 | 325 | 265 | 3,21 |
| B | 18,1 | 94 | 28 | 522 | 216 | 2,70 |
| C | 17,35 | 180 | 78 | 245 | 199 | 3,54 |
| D | 15,7 | 36 | 8 | 363 | 309 | 3.06 |
| E | 17,5 | 63 | 42 | 748 | 197 | 3,98 |
| F | 16,3 | 256 | 161 | 339 | 225 | 3,26 |
| G | 21.1 | 23 | 2 | 198 | 285 | 4,11 |

**Table 2**

| Kartoffel | Acrylamid [µg/100 g] | |
|---|---|---|
| Sorte | Erfindungsgemäßer Snack** | Herkömmlich frittierte Chips |
| A | < 40 * | 1323 |
| B | < 40 * | 1615 |
| C | < 40 * | 3337 |
| D | < 40 * | 615 |
| E | < 40 * | 1368 |
| F | < 40 * | 5560 |
| G | < 40 * | 345 |

| | | |
|---|---|---|
| (* Bestimmungsgrenze; ** Snack, hergestellt gemäß dem vorbeschriebenen, erfindungsgemäßen Verfahren) | | |

Die Druck- und Temperaturbereiche für die Trocknung unter Unterdruck können sehr variabel gewählt werden, um Produkte mit unterschiedlichen Textureigenschaften zu erzeugen. Vor allem Kombinationen im Bereich von z.B. 10 hPa (absolut) bei 100°C bis 125°C (untere Kontakttemperatur) über eine Dauer von 45 Minuten zeigten sehr gute Ergebnisse. Es hat sich jedoch auch gezeigt, dass der mögliche Parameterraum produktspezifisch und prinzipiell sehr groß sein kann.

Analytische Methode für die Bestimmung des Gehalts an Acrylamid:

Die Bestimmung der Trockenmassen erfolgte mittels Oberflächenverdampfer und belüftetem Wärmeschrank bei 105°C. Der Anteil gelöster Trockensubstanz wurde nach Abfiltration der ungelösten Substanz ermittelt. Die Bestimmung von Acrylamid erfolgte mittels LCMS.
HPLC-System von Perkin Elmer Serie 200
HPLC-Säule: LiChroCART 250-4 Lichrospher CN 5 µm
250 mm x 4,6 mm (Merck Bestell-Nr.: 1.50892.0001)

LiChroCART 4-4 10 Vorsäulenkartuschen Lichrospher 100 CN (5 µm)
   (Merck Bestell-Nr.: 1.50959.0001)
Eluent: Wasser/ Acetonitril 99,5 : 0,5 v/v versetzt mit 0,1 % (v/v) Ameisensäure (98%)
   isokratisch, Fluss 0,250 ml/min
Chemikalien: Wasser HPLC grade von Baker;
   Acetonitrilgradient für die HPLC von Chemsolute;
   Ameisensäure 98 % bis 100 % p.A. (Merck).
MS/MS-Bedingungen:
   API 2000 von Applied Biosystems, Darmstadt
Modus:
   Multi-reaktion monitoring (MRM) im positiven Elektronenspray-Ionisierungsmode (ESI+)
Qualifier-Übergänge:
   Acrylamid m/z 72 zu 72 und m/z 72 zu 52
   Interner Standard D3 -Acrylamid m/z 75 zu 75 und m/z 75 zu 58
Einstellungen der Turbolon Spray Quelle:
   Source Temperature 450°C
   Ion Source Gas 1: 45.00 psi
   Ion Source Gas 2: 60.00 psi
   Collision Gas: 3.00 psi

   Ionenenergie IE1:0,9 V
   Ionenenergie IE3: 1,3 V
   Dwell time 0,25 sec
   Resolution Q1: Unit
   Resolution Q2 : Unit

Wie bereits vorstehend beschrieben ermöglicht das erfindungsgemäße Verfahren unter anderem die Herstellung von Snackprodukten mit einer aufgrund der ausgebildeten Schaumstruktur einzigartigen Textur, d.h. die erfindungsgemäß hergestellten Snackprodukte sind knusprig bei vorstehend erwähnten ernährungsphysiologisch vorteilhaften Eigenschaften. Die beim Verspeisen empfundenen Textureigenschaften von erfindungsgemäß hergestellten Snacks lassen sich mit denen von herkömmlich mittels Frittieren hergestellten Snacks vergleichen, insbesondere im Hinblick auf die erzielbare Knusprigkeit. Das heißt, dass der Verbraucher beim Essen der erfindungsgemäß hergestellten Snacks Textureigenschaften empfindet, die mit denen herkömmlich hergestellter Snacks, insbesondere mittels Frittieren hergestellter Snacks vergleichbar sind.

In Fig. 10 sind zwei beispielhafte Trocknungskurve für zwei beispielhafte auf Kartoffeln basierende Snackprodukte gezeigt, die entsprechend dem erfindungsgemäßen Verfahren hergestellt wurden. Das Diagramm illustriert den Feuchtigkeitsgehalt zweier beispielhafter Snackprodukte während des Trocknungs- und Expansionsprozesses über die Zeit bei unterschiedlich gewählten Prozessparametern:
Kurve 1 / Beispiel 1
   Anfangsbedingungen: Trocknungstemperatur von 120°C bei einem Druck von 20 hPa (absolut). Nach 10 Minuten wurde die Temperatur auf 100°C reduziert und bis zur Gleichgewichtsfeuchte nach 35 Minuten bei einem Druck von 20 hPa (absolut) weiter getrocknet. Das leichte und knusprige Snackprodukt weist eine Restfeuchte von 3,62 % (Masseanteil) und einen Acrylamidgehalt von kleiner als 20 µg/kg auf.
Kurve 2 / Beispiel 2
   Anfangsbedingungen: Trocknungstemperatur von 100°C bei einem Druck von 20 hPa (absolut). Die Temperatur wurde über 45 Minuten bei einem Druck von 20 hPa (absolut) bis zur Gleichgewichtsfeuchte konstant gehalten. Selbst bei dieser etwas niedrigeren Temperatur erhält man ein vergleichbares Produkt wie aus Beispiel 1, in diesem Fall ein Produkt mit einer Restfeuchte von 3,62 % (Masseanteil) und einem Acrylamidgehalt von kleiner als 20 µg/kg.

Versuche an erfindungsgemäß herstellten Proben habe weiterhin gezeigt, dass der Trocknungs- und Expansionsprozess durch über die Zeit ändernde Parameter wie in Kurve 1 beispielhaft illustriert optimiert werden kann, da bei der anfänglichen Expansion ein stärkerer Dampfdruck vorteilhaft ist als später bei der nachfolgenden Trocknung, die insbesondere die weitere Verfestigung der Matrix bzw. der durch die Expansion gebildeten Schaummatrix verfolgt.

Das erfindungsgemäße Verfahren erlaubt es vorteilhafterweise hitzeempfindliche Zutaten zu verwenden, die bei den bisher bekannten Herstellungsverfahren aufgrund der notwendigen Erhitzungsschritte (Frittieren, Backen, Heißluft, Mikrowelle usw.) nicht ohne Schädigung verarbeitet werden können. Darüber hinaus können die Geschmack gebenden Zutaten in das Produkt eingearbeitet werden, was beispielsweise bei herkömmlich hergestellten Chips nicht so möglich ist. Bei herkömmlichen Chips werden die Geschmack gebenden Stoffe von außen als Pulver aufgestreut. Hier bestehen Grenzen bezüglich der Haftung und somit der applizierbaren Menge an Geschmacksstoffen.

Durch die wie vorstehend beschriebene mögliche Einarbeitung von natürlichen Zutaten, wie z.B. Gewürze, Kräuter und Gemüse in das Produkt kann mit dem neuen Verfahren ein Gemüsesnack mit besonderer Geschmacksintensität und -Komplexität erhalten werden. Die Zutaten können darüber hinaus zur Geschmacksentwicklung, wie bei einer küchentechnischen Zubereitung auch, vor dem Einarbeiten beispielsweise blanchiert, geröstet, gebraten und/oder gegrillt werden. Ein weiterer Vorteil ist, dass manche Zutaten auch als mehrere Millimeter große Partikel eingearbeitet werden können. Die Zutaten sind dann für den Kunden nicht nur schmeckbar sondern auch sichtbar. Weiterhin können bestimmte körnige Partikel mit einer abweichenden Eigenkonsistenz als die Matrix des verarbeiteten Gemüses wie z.B. Gewürzstückchen, kandierte Fruchtstückchen, Gemüsestreifen zu einem mehrdimensionalen komplexen Kaueindruck beitragen, was wiederum die mögliche Produktvielfalt erweitert.

Ein weiterer erfindungsgemäßer Vorteil der nach dem vorstehend beschriebenen Verfahren hergestellten Snacks ist die "interne" Geschmacksgebung (durch Untermischen der Geschmack gebenden Zutaten in das Gemüsemus) und die damit einhergehenden sauberen Finger beim Verzehr, da auf mittels Öl als Haftvermittler aufgebrachte Geschmack vermittelnde Beschichtung verzichtet werden kann. Bekannterweise führen herkömmlich hergestellte frittierte Chips und andere fettige Snackprodukte beim Verzehr aufgrund des hohen Fettgehaltes und der von außen aufgetragenen Gewürzpulver zu fettigen und klebrigen Fingern.

Das erfindungsgemäße Verfahren vereint auf einzigartige Weise die neuesten ernährungsphysiologischen Anforderungen mit den selbstverständlichen Erwartungen des Kunden an einen geschmack- und genussvollen Snack.

Die Beschreibung und die Ansprüche enthalten Merkmale in Kombinationen. Der Fachmann wird die Merkmale zweckmäßigerweise auch einzeln in Betracht ziehen und im Sinne weiterer Kombinationen zusammenfassen. Der Schutzumfang der vorliegenden Erfindung ist durch die Ansprüche definiert.

## Patentansprüche

1. Verfahren zur Herstellung eines auf Kartoffeln und/oder Gemüse basierenden, insbesondere chipsartigen Snackproduktes, welches die folgenden Schritte in angegebener Reihenfolge umfasst:
a. Vorbereiten des zu verarbeitenden Gemüses und/oder der Kartoffeln;
b. Kochen bzw. Garen des vorbereiteten Gemüses und/oder der Kartoffeln bis das Gemüses und/oder die Kartoffeln im Wesentlichen vollständig durchgegart sind;
c. Passieren des gekochten Gemüses und/oder der gekochten Kartoffeln zu einem Gemüsemus;
d. Zugeben von einer oder mehreren Zutaten, die für Kartoffelchips üblich sind, in das Gemüsemus;
e. Aufdressieren des Gemüsemuses in einzelnen Portionen;
f. Expandieren und Trocknen bei erhöhter Temperatur und unter Unterdruck der Portionen zu dem auf Gemüse bzw. Kartoffeln basierenden Snackprodukt.

2. Verfahren gemäß Anspruch 1, wobei das Vorbereiten in dem Schritt a. einen oder mehrere der folgenden Schritte umfasst:
- Waschen;
- Schälen; und
- Zerkleinern des Gemüses bzw. der Kartoffeln.

3. Verfahren gemäß Anspruch 1 oder 2, ferner umfassend:
g. Nach- oder Endtrocknung der Portionen, wobei das Expandieren und Trocknen nach dem Schritt f. und das Nach- oder Endtrocknen nach dem Schritt g. bevorzugt in verschiedenen Kammern durchgeführt wird.

4. Verfahren gemäß einem der vorstehenden Ansprüche, wobei das Gemüsemus bzw. das Kartoffelmus, das durch Passieren des gekochten Gemüses bzw. der gekochten Kartoffeln erhalten wird, im Wesentlichen homogen ist.

5. Verfahren gemäß einem der vorstehenden Ansprüche, wobei das Kochen bzw. Garen des vorbereiteten Gemüses nach dem Schritt b. in einem ölfreien Medium erfolgt, wobei das Kochen bzw. Garen bevorzugt mit Hilfe von Mikrowellen, in Wasser, in Wasserdampf unter Normaldruck oder in Wasserdampf unter Überdruck durchgeführt wird.

6. Verfahren gemäß einem der vorstehenden Ansprüche, wobei Zutaten auf die einzelnen Portionen vor dem Expandieren und Trocknen und/oder nach dem Expandieren und Trocknen aufgestreut oder aufgebracht werden, wobei beim Aufstreuen oder Aufbringen von Zutaten auf die aufdressierten Portionen die Feuchtigkeit des Gemüsemuses als Haftvermittler dient.

7. Verfahren gemäß einem der vorstehenden Ansprüche, wobei das Expandieren und Trocknen nach dem Schritt f. bei einem Unterdruck von ungefähr 20 hPa oder weniger, bevorzugt bei einem Unterdruck von ungefähr 10 hPa oder weniger, insbesondere bevorzugt bei einem Unterdruck in einem Bereich von ungefähr 20 hPa bis 10 hPa durchgeführt wird.

8. Verfahren gemäß einem der vorstehenden Ansprüche, wobei das Expandieren und Trocknen nach dem Schritt f. bei einer Temperatur von maximal ungefähr 150°C, bevorzugt bei einer Temperatur in einem Bereich von ungefähr 150°C bis 100°C, insbesondere bevorzugt bei einer Temperatur in einem Bereich von ungefähr 130°C bis 100°C durchgeführt wird.

9. Verfahren gemäß einem der vorstehenden Ansprüche, wobei das Expandieren und Trocknen nach dem Schritt f. über eine Dauer von ungefähr 30 min bis 60 min, bevorzugt über eine Dauer von ungefähr 45 min durchgeführt wird.

10. Verfahren gemäß einem der vorstehenden Ansprüche, wobei die Temperatur während des Expandierens und Trocknens nach dem Schritt f. gesenkt wird, bevorzugt von anfänglich ungefähr 130°C auf nachfolgend ungefähr 100°C, so dass im Wesentlichen zunächst die Expansion durch Wasserdampfbildung zur Schaumbildung in dem Produkt erfolgt und nachfolgend die Schaumstruktur des Produktes durch das weiteres Trocknen verfestigt wird.

11. Verfahren gemäß einem der vorstehenden Ansprüche, wobei die Zutaten Geschmack gebende Zutaten umfassen, wobei die Geschmack gebenden Zutaten insbesondere frische oder gefrorene Zutaten umfassen.

12. Verfahren gemäß einem der vorstehenden Ansprüche, wobei die Zutaten frische Zutaten sind, wobei die Zutaten eingefrorene Zutaten sind, die in frischem Zustand eingefroren wurden, oder die Zutaten blanchiert, geröstet, gebraten und/oder gegrillt sind.

13. Verfahren gemäß einem der vorstehenden Ansprüche, wobei das Snackprodukt im Wesentlichen ölfrei gegart wird.

14. Snackprodukt aus Kartoffeln und/oder Gemüse, erhältlich nach einem Verfahren gemäß den Ansprüchen 1 bis 13.

15. Produkt gemäß Anspruch 14, wobei die Textur des Snackproduktes eine stabilisierte Schaumstruktur aufweist, die durch Wasserdampfblasen gebildete Hohlräume ausgebildet wird, die sich während des Expandierens und Trocknens bei erhöhter Temperatur und unter Unterdruck in dem Produkt bilden, wobei sich die Schaumstruktur des Snackproduktes durch das Trocknen verfestigen, so dass eine feinporige, knusprige und bevorzugt sprödbrechende Textur erhalten wird.

16. Produkt gemäß Anspruch 14 oder 15, wobei das Snackprodukt aus einem Kartoffel- bzw. Gemüsemus als Matrix hergestellt ist, in das eine oder mehrere Geschmack tragende Zutaten eingemischt sind, wobei die Zutaten insbesondere umfassen: frische oder gefrorene Zutaten und/oder haltbare Zutaten wie Salz, Kräuter, Gemüse, Gewürze und Pilze und weiter Fette, Öle, Emulgatoren, und erforderlichenfalls Bindung vermittelnde Hilfsmittel.

17. Produkt gemäß einem der vorstehenden Ansprüche 14 bis 16, wobei das gekochte Gemüse bzw. die gekochten Kartoffeln durch eine Lochscheibe oder ein perforiertes Blech gepresst wird, um ein im wesentlichen homogenes Gemüse-/Kartoffelmus zu erhalten, wobei die Lochescheibe oder das perforierte Blech einen Lochdurchmesser von ungefähr 2 mm bis 6 mm, bevorzugt ungefähr 4,5 mm aufweist.

18. Produkt gemäß einem der vorstehenden Ansprüche 14 bis 17, wobei das Expandieren und Trocknen in einer beheizbaren Unterdruckkammer durchgeführt wird.

19. Produkt gemäß Anspruch 18, wobei das Aufdressieren mit Hilfe einer Dressiervorrichtung durchgeführt wird, die in der Unterdruckkammer angeordnet ist.

20. Produkt gemäß einem der vorstehenden Ansprüche 13 bis 17, wobei der Acrylamidgehalt des Produktes geringer als 40 µg/kg im Wesentlichen unabhängig von den Zucker- und Asparagingehalten des Ausgangsgemüses.
